Europäisches Patentamt

European Patent Office

Office européen des brevets

(11) Veröffentlichungsnummer: **0 463 355 A1**

## EUROPÄISCHE PATENTANMELDUNG

(21) Anmeldenummer: **91108074.5**

(22) Anmeldetag: **18.05.91**

(51) Int. Cl.⁵: **B60T 8/48**

(30) Priorität: **27.06.90 DE 4020450**

(43) Veröffentlichungstag der Anmeldung:
**02.01.92 Patentblatt 92/01**

(84) Benannte Vertragsstaaten:
**DE FR GB SE**

(71) Anmelder: **ROBERT BOSCH GmbH**
**Postfach 10 60 50**
**W-7000 Stuttgart 10(DE)**

(72) Erfinder: **Gutzeit, Reinhard, Dipl.-Ing.**
**Erlenstrasse 11**
**W-8045 Ismaning(DE)**

(74) Vertreter: **Knetsch, Manfred et al**
**Postfach 10 60 50**
**W-7000 Stuttgart 10(DE)**

(54) **Hydraulische Zweikreisbremsanlage.**

(57) Eine hydraulische Zweikreisbremsanlage mit Blockierschutzsystem (ABS) und Antriebsschlupfregelung (ASR) für Kraftfahrzeuge weist ein Vierkanal-Hydroaggregat (20) mit Steuerventilen (31-34) und einer Rückförderpumpe (27) mit zwei getrennten Pumpenelementen (28,29) für jeden Bremskreis auf. Zur Bremsdruckversorgung im ASR-Betrieb ist ein aktiver Kolbenspeicher (40) vorgesehen und jeder mindestens ein Antriebsrad enthaltender Bremskreis mittels eines Absperrventils (35) vom Hauptbremszylinder (15) abtrennbar. Der die übliche Speicherkammer am Eingang des dem Bremskreis der Antriebs-räder (11,12) zugeordneten Pumpenelements (28) ersetzende Kolbenspeicher (40) wird zu Beginn der Antriebsschlupfregelung aktiviert und dadurch aus dem Bremsflüssigkeitsbehälter (18) mit Bremsflüssigkeit befüllt. Danach wird der Kolbenspeicher (40) deaktiviert, so daß die Speicherfeder (43) wirksam wird und über den Speicherkolben (44) Bremsflüssigkeit in das an dem Kolbenspeicher (40) angeschlossene Pumpenelement (28) eingespeist.

Fig. 1

## Stand der Technik

Die Erfindung geht aus von einer hydraulischen Zweikreisbremsanlage mit Blockierschutzsystem (ABS) und Antriebsschlupfregelung (ASR) für Kraftfahrzeuge der im Oberbegriff des Anspruchs 1 definierten Gattung.

Bei einer bekannten Zweikreisbremsanlage dieser Art mit einer Vorderachs/Hinterachs-Bremskreisaufteilung wird außerhalb des ASR-Betriebes durch Aktivierung des Bremsflüsigkeitsspeichers dessen Speicherkammer mit Bremsflüssigkeit aus einem Bremsflüssigkeitsreservoir gefüllt und durch ein in seiner Grundstellung sich befindliches 2/2-Wegemagnetventil von dem angeschlossenen Pumpenelement abgetrennt. Bei ASR-Betrieb wird zusammen mit dem Absperrventil das 2/2- Wegemagnetventil in seine Offenstellung umgeschaltet und damit die gefüllte Speicherkammer mit dem Eingang des Pumpenelements der Rückförderpumpe verbunden. Zugleich wird die Rückförderpumpe eingeschaltet. Von der Speicherkammer wird Bremsflüssigkeit in das nicht selbstansaugende Pumpenelement eingespeist, und dieses erzeugt seinerseits einen hohen, nahezu unveränderten Bremsversorgungsdruck, der an den Steuerventilen für die Radbremszylinder der Antriebsräder ansteht. Der zum Abbremsen eines schlüpfenden Antriebsrades in dessen Radbremszylinder erforderliche Bremsdruck wird in der notwendigen Größe durch Schalten des diesem Radbremszylinder zugeordneten Steuerventils eingestellt (DE 38 OO 854).

## Vorteile der Erfindung

Die erfindungsgemäße Zweikreisbremsanlage mit den kennzeichnenden Merkmalen des Anspruchs 1 hat den Vorteil, daß durch die erfindungsgemäße Aktivierung des Speicherkolben-Antriebs erst im ASR-Betrieb das bei der bekannten Bremsanlage vorhandene zusätzliche 2/2-Wegemagnetventil zwischen Speicherkammer und Pumpenelement eingespart werden kann. Sobald ein Antriebsschlupf sensiert wird, wird der Antrieb des Speichers aktiviert, der den Speicherkolben gegen die Kraft der Speicherfeder verschiebt. Durch das sich damit vergrößernde Volumen der Speicherkammer entsteht in letzterer ein Unterdruck. Damit kann aus dem drucklosen Bremsflüssigkeitsbehälter Bremsflüssigkeit in die Speicherkammer einströmen. Das in der Verbindung zwischen Speicherkammer und Bremsflüssigkeitsbehälter befindliche Rückschlagventil hat einen geringen Öffnungsdruck von z.B. von 0,5 bar und behindert das Einströmen der Bremsflüssigkeit nicht. Nach Füllen des Speichers wird das Absperrventil umgesteuert und die Rückförderpumpe eingeschaltet, sowie der Speicherkolben-Antrieb deaktiviert. Unter dem von der Speicherfeder erzeugten Druck wird die Bremsflüssigkeit in das Pumpenelement der Rückförderpumpe eingespeist, das seinerseits in bekannter Weise den Bremsversorgung erzeugt. Außerdem läßt die Speicherkammer den bei der bekannten Bremsanlage vorhandenen Niederdruckspeicher am Eingang des Pumpenelements im Bremskreis der Antriebsräder überflüssig werden.

Reicht das in der Speicherkammer des Kolbenspeichers gespeicherte Bremsflüssigkeitsvolumen zur Generierung eines ausreichend hohen Bremsdrucks nicht aus, so kann der Speicherkolben durch erneute Aktivierung des Antriebs einen weiteren Hub ausführen. Zum Bremsdruckabbau in den Radbremszylindern am Ende des ASR-Betriebs werden die Steuerventile auf Druckentlastung umgeschaltet. Die Speicherkammer des Kolbenspeichers ist damit in der Lage, das aus den Radbremszylindern abströmende Bremsflüssigkeitsvolumen aufzunehmen. Danach werden die Steuerventile und das Absperrventil entregt. Das zugeordnete Pumpenelement fördert die Bremsflüssigkeit in den Hauptbremszylinder zurück. Damit ist sichergestellt, daß auch die Speicherkammer des Kolbenspeichers leer ist und bei evtl. sich anschließendem ABS-Betrieb ein schneller Bremsdruckabbau gewährleistet ist. Reicht die Kapazität der Speicherkammer zur Aufnahme des aus dem Radbremszylinder abströmenden Flüssigkeitsvolumen nicht aus, kann zusätzlich das Absperrventil in seine Offenstellung zurückgesetzt werden.

Durch die in den weiteren Ansprüchen aufgeführten Maßnahmen sind vorteilhafte Weiterbildungen und Verbesserungen der im Anspruch 1 angegebenen Zweikreisbremsanlage möglich.

Gemäß einer bevorzugten Ausführungsform der Erfindung wird der Antrieb für den Speicherkolben von einem Elektromagneten gebildet, wobei der Speicherkolben den Anker des Elektromagneten bildet.

In einer bevorzugten Ausführungsform der Erfindung ist ein Rückschlagventil mit zum Hauptbremszylinder weisender Sperrichtung vorgesehen, das mit Umsteuern des Absperrventils in seine Sperrstellung in der Verbindungsleitung zwischen Hauptbremszylinder und angeschlossenem Bremskreis wirksam wird. Durch dieses Rückschlagventil ist während des ASR-Betriebs jederzeit ein Einbremsen über den Hauptbremszylinder möglich.

## Zeichnung

Die Erfindung ist anhand eines in der Zeichnung dargestellten Ausführungsbeispiels in der nachfolgenden Beschreibung näher erläutert. Es zeigen:

Fig. 1    ein Blockschaltbild einer Zweikreisbremsanlage mit Blockierschutzsystem, Antriebsschlupfregelung und Vorderachs/Hinterachs-Bremskreisaufteilung für einen Personenkraftwagen,

Fig. 2 eine vergrößerte Darstellung eines Längsschnitts eines Kolbenspeichers im Blockschaltbild der Fig. 1.

Beschreibung des Ausführungsbeispiels

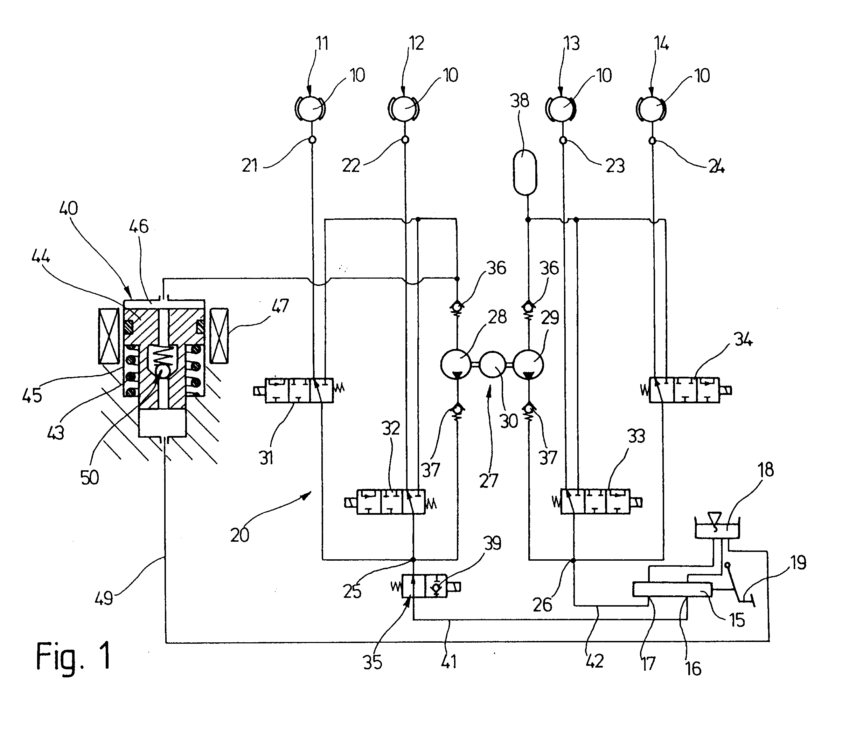

Bei der in Fig. 1 im Blockschaltbild dargestellten hydraulischen Zweikreisbremsanlage mit vorne/hinten- oder Vorderachs/Hinterachs- oder TT-Bremskreisaufteilung, Blockierschutzsystem (ABS) und Antriebsschlupfregelung (ASR), letztere auch Vortriebsregelung genannt, für einen Personenkraftwagen, sind die Radbremszylinder 10 der Antriebsräder 11,12 in dem einen Bremskreis und die Radbremszylinder 10 der nicht angetriebenen Räder 13,14 in dem anderen Bremskreis angeordnet. Im allgemeinen sind dabei die Antriebsräder 11,12 die Hinterräder des Personenkraftwagens. Zu der Zweikreisbremsanlage gehört in an sich bekannter Weise ein Hauptbremszylinder 15, der zwei getrennte Bremskreisausgänge 16,17 zum Anschließen jeweils eines der beiden Bremskreise aufweist und mit einem Bremsflüssigkeitsbehälter 18 in Verbindung steht. Bei Betätigung eines Bremspedals 19 wird ein gleich großer Bremsdruck an den beiden Bremskreisausgängen 16,17 ausgesteuert.

Zu der Zweikreisbremsanlage gehört ferner ein Vierkanal-Hydroaggregat 20, das vier Auslaßkanäle 21 - 24 und zwei Einlaßkanäle 25 und 26 aufweist. An jedem Auslaßkanal 21 - 24 ist ein Radbremszylinder 10 der Räder 11 - 14 angeschlossen. Der Einlaßkanal 25 ist über eine erste Verbindungsleitung 41 mit dem Bremskreisausgang 16 und der zweite Einlaßkanal 26 über eine zweite Verbindungsleitung 42 mit dem Bremskreisausgang 17 des Hauptbremszylinders 15 verbunden. Jedem Auslaßkanal 21 - 24 ist ein als 3/3-Wegemagnetventil mit Federrückstellung ausgebildetes Steuerventil 31 - 34 zugeordnet. Diese werden von einer hier nicht dargestellten Steuerelektronik gesteuert und dienen zum Einstellen von radschlupfabhängigen Bremsdrücken in den zugeordneten Radbremszylindern 10. Eine Rückförderpumpe 27, die Bestandteil des Vierkanal-Hydroaggregats 20 ist, weist zwei Pumpenelemente 28,29 auf, die von einem Elektromotor 30 angetrieben werden. Die Pumpenelemente 28,29 dienen zum Rückfördern von Bremsflüssigkeit beim Druckabbau in den Radbremszylindern 10. Jeweils ein Pumpenelement 28,29 ist in einem Bremskreis wirksam und eingangsseitig jeweils über die beiden, dem gleichen Bremskreis zugeordneten Steuerventile 31,32 bzw. 33,34 mit den Radbremszylindern 10 der Fahrzeugräder 11 - 14 verbindbar und ausgangsseitig an einem Einlaßkanal 25 bzw. 26 des Vierkanal-Hydroaggregats 20 angeschlossen. Vor und nach jedem Pumpenelement 28,29 sind ein Pumpeneinlaßventil 36 und ein Pumpeneinlaßventil 37 angeordnet. An dem Pumpenelement 28 im Bremskreis der nicht angetriebenen Räder 13,14 ist ein Niederdruckspeicher 38 und an dem Pumpenelement 29 im Bremskreis der Antriebsräder 11,12 ist ein Kolbenspeicher 40 angeschlossen, und zwar jeweils auf der Eingangsseite der Einlaßventile 36. Die Steuerventile 31 - 34 sind mit ihrem ersten Ventilanschluß paarweise an den jeweils einem Bremskreis zugeordneten Einlaßkanälen 25,26 mit ihrem zweiten Ventilanschluß jeweils an dem zugeordneten Auslaßkanal 21 - 24 und mit ihrem dritten Ventilanschluß paarweise an den Einlaßventilen 36 der Pumpenelemente 28,29 angeschlossen. Die Steuerventile 31 - 34 sind in bekannter Weise so ausgebildet, daß in ihrer ersten, nicht erregten Grundstellung ein ungehinderter Durchgang von den Einlaßkanälen 25,26 zu den Auslaßkanälen 21 - 24 besteht, wodurch der vom Hauptbremszylinder 15 ausgesteuerte Bremsdruck in die Radbremszylinder 10 der Fahrzeugräder 11 - 14 gelangt. In der zweiten Ventilmittelstellung, die durch Erregung der Steuerventile 31 - 34 mit halbem Maximalstrom herbeigeführt wird, ist dieser Durchgang unterbrochen, und alle Ventilanschlüsse sind abgesperrt, so daß der in den Radbremszylndern 10 aufgebaute Bremsdruck konstant gehalten wird. In der dritten Ventilendstellung, die durch Ventilerregung mit Maximalstrom eingestellt wird, werden die Ausgangskanäle 21 und 22 bzw. 23 und 24 für die Radbremszylinder 10 der Fahrzeugräder 11 - 14 mit dem Niederdruckspeicher 38 bzw. Kolbenspeicher 40 verbunden, so daß Bremsflüssigkeit aus den Radbremszylindern 10 in die Speicher 38 bzw. 40 abfließen kann, um dann von den Pumpenelementen 28,29 über die Einlaßkanäle 25,26 zu dem Hauptbremszylinder 15 zurückgefördert zu werden.

Das Vierkanal-Hydroaggregat 20 bildet zusammen mit der nicht dargestellten Steuerelektronik das Antiblockierschutzsystem, dessen Komponenten auch für die Antriebsschlupfregelung herangezogen werden. Hierzu ist in der Verbindungsleitung 41 zwischen dem Bremskreisausgang 16 des Hauptbremszylinders 15 und dem Einlaßkanal 25 des Vierkanal-Hydroaggregats 20, an dem der Bremskreis der Antriebsräder 11,12 angeschlossen ist, ein Absperrventil 35 angeordnet, das als 2/2-Wegemagnetventil mit Federrückstellung ausgebildet ist und in seiner Umschaltstellung die Verbindungsleitung 41 absperrt. Damit ist bei ASR-Betrieb der Bremskreis der Antriebsräder 11,12 von dem Hauptbremszylinder 15 abgetrennt. In dem Absperrventil 35 kann noch ein Rückschlagventil 39 integriert sein, das im ASR-Fall bei Umschalten des Absperrventils 35 in der Verbindungsleitung 41 mit zum Bremskreis der Antriebsräder 11,12 weisender Durchflußrichtung wirksam ist. Durch dieses Rückschlagventil 39 ist im ASR-Fall nach wie vor der Bremskreis der Antriebsräder 11,12 vom Hauptbremszylinder 15 abgetrennt, jedoch kann vom Hauptbremszylinder 15 her während des ASR-Betriebs in den Bremskreis der Antriebsräder 11,12 eingebremst werden. Der als aktiver Speicher ausgebildete Kolbenspeicher 40 weist einen von einer Speicherfeder 43 belasteten Speicherkolben 44 auf, der in einem Speicherzylinder 45 axial verschieblich geführt ist und stirnseitig zusammen mit dem Speicherzylinder 45 eine Speicherkammer 46 begrenzt. Der Speicherkolben 44 ist mittels eines Elektromagneten 47, der hier durch seine Spulenwicklung symbolisiert ist, zur Axialverschiebung antreibbar. In gleicher Weise kann der Speicherkolben 44 auch von einem Elektromotor, von Druckluft oder von einem Vakuum angetrieben werden. Die Speicherkammer 46 steht einerseits über das Pumpeneinlaßventil 36 mit dem Pumpenelement 28 und andererseits über eine Fülleitung 49 mit dem Bremsflüssigkeitsbehälter 18 in Verbindung, wobei in dieser Verbindung ein Rückschlagventil 50 mit zur Speicherkammer 46 weisender Durchflußrichtung eingeschaltet ist.

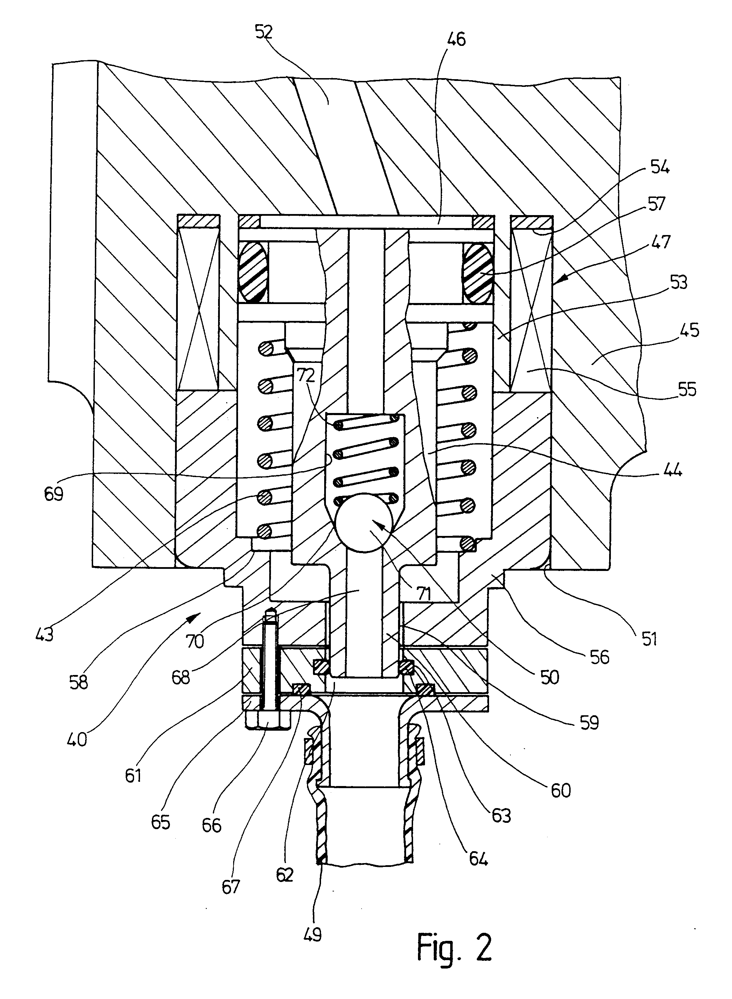

Konstruktive Details des Kolbenspeichers 40 sind dem Längsschnitt in Fig. 2 zu entnehmen. In dem Speicherzylinder 45 ist eine sacklochartige Ausnehmung 51 eingebracht, an deren Grund eine Anschlußbohrung 52 mündet, die mit dem Einlaßventil 36 zu verbinden ist. Vom Grunde der Ausnehmung 51 steht ein Ringsteg 53 vor, der einstückig mit dem Speicherzylindergehäuse ist und zusammen mit diesem eine Ringnut 54 bildet, in welcher die als Zyinderspule ausgebildete Erregerwicklung 55 des Elektromagneten 47 einliegt. Die Erregerwicklung 55 wird mittels einer topfartigen Kappe 56, die in die Ausnehmung 51 eingesetzt wird und sich stirnseitig auf dem Ringsteg 53 abstützt, in der Ringnut 54 mechanisch fixiert. Der Speicherkolben 44 ist an der Innenfläche des Ringstegs 53 axial verschieblich geführt und mittels einer Ringdichtung 57 gegenüber dieser abgedichtet, so daß die vom Speicherkolben 44 und Nutgrund der Ausnehmung 51 begrenzte Speicherkammer 46 gegenüber dem Innenraum der Kappe 56 abgedichtet ist. Die Kappe 56 trägt eine innere Ringschulter 58, an welcher sich die den Speicherkolben 44 belastende Speicherfeder 43 abstützt. Die Kappe 56 ist mit einer zentralen Führungsbohrung 59 versehen, durch welche ein im Durchmesser reduzierter Zapfen 60 des Speicherkolbens 44 hindurchragt. Auf der Kappe 56 ist ein Flansch 61 mit einer zur Führungsbohrung 59 koaxialen Zulaufbohrung 62 mittels Schrauben 66 befestigt. Der Zapfen 60 des Speicherkolbens 44 ragt auch in die Zulaufbohrung 62 hinein und ist gegenüber der Bohrungswand der Zulaufbohrung 62 durch eine in einer Ringnut 63 im Flansch 61 einliegenden Dichtung 64 abgedichtet. An der Zulaufbohrung 62 ist die Fülleitung 49 angeschlossen, wozu diese mit einem Anschlußblech 65 mittels der Schrauben 66 auf der Stirnseite des Flansches 61 befestigt ist. Zwischen Anschlußblech 65 und Fansch 61 ist eine Flachdichtung 67 vorgesehen. Der Speicherkolben 44 ist mit einer Axialbohrung 68 durchzogen, die eine Bohrungserweiterung 69 aufweist, in welcher ein Ventilsitz 70 für das kugelförmige Ventilglied 71 des Rückschlagventils 50 ausgebildet ist. Das Ventilglied 71 wird von einer Rückstellfeder 72 auf den Ventilsitz 70 aufgepreßt und sperrt den Durchgang von der Speicherkammer 46 zur Fülleitung 49. Das Rückschlagventil öffnet bei einem Druck von kleiner 0,5 bar und gibt die Verbindung von Fülleitung 49 zur Speicherkammer 46 frei.

Im ASR-Betrieb wird der Speicherkolben 44 von dem Elektromagenten 47 entgegen der Kraft der Speicherfeder 43 in die untere Stellung bewegt, wodurch das Volumen der Speicherkammer 46 sich vergrößert und in dieser Unterdruck entsteht. Infolge des Unterdrucks kann nunmehr aus dem drucklosen Bremsflüssigkeitsbehälter 18 über die Fülleitung 49 und das Rückschlagventil 50 Bremsflüsigkeit in die Speicherkammer 46 einströmen. Nach Füllen der Speicherkammer 46 wird der Elektromagnet 47 abgeschaltet und zugleich das Absperrventil 35 in seine Umschaltstellung umgesteuert, so daß der Bremskreis der Antriebsräder 11,12 von dem Hauptbremszylinder 15 abgesperrt ist. Weiterhin wird der Elektromotor 30 der Rückförderpumpe 27 eingeschaltet. Unter dem Druck der Speicherfeder 43 wird Bremsflüssigkeit aus der Speicherkammer 46 ausgeschoben und über das Pumpeneinlaßventil 36 in das Pumpenelement 28 der Rückförderpumpe 27 eingespeist. Das Pumpenelement 28 erzeugt einen Bremshochdruck, der über dem in den Radbremszylindern 10 der Antriebsräder 11,12 ausgesteuerten maximalen Bremsdruck liegt. Weist beispielsweise das Antriebsrad 11 Antriebsschlupf auf, so wird das Steuerventil 32 des nicht schlüpfenden Antriebsrades 12 in die Ventilmittelstellung überführt, so daß der Auslaßkanal 22 von der Bremsdruckeinspeisung abgesperrt ist. Über das andere Steuerventil 31 wird Bremsdruck in dem Radbremszylinder 10 des durchdrehenden Antriebsrades 11 aufgebaut, das damit abgebremst wird. Der erforderliche Bremsdruck wird durch Druckmodulation, die durch Schalten des Steuerventils 31 bewirkt wird, eingestellt. Bei Antriebsschlupf beider Antriebsräder 11,12 werden beide Steuerventile 31,32 zur Bremsdruckmodulation zwischen der Ventilgrundstellung und Ventilmittelstellung hin- und hergeschaltet.

Am Ende des ASR-Betriebs, wenn das schlüpfende Antriebsrad soweit abgebremst ist, daß es keinen Schlupf mehr zeigt, wird das Steuerventil 31 auf Druckentlastung in seine Endstellung umgeschaltet. Die Speicherkammer 46 ist dadurch in der Lage, daß aus dem Radbremszylinder 10 des Antriebsrades 11 abfließende Bremsflüssigkeitsvolumen aufzunehmen. Das Steuerventil 31 und das Absperrventil 35 werden entregt, so daß beide ihre in Fig. 1 dargestellte Grundstellung einnehmen. Unter dem Druck der Rückstellfeder 43 wird das Bremsflüssigkeitsvolumen aus der Speicherkammer 46 ausgeschoben und von dem Pumpenelement 28 der Rückförderpumpe 27 über das Absperrventil 35 in den Hauptbremszylinder 15 zurückgefördert. Nach Entleeren der Speicherkammer 46 wird die Rückförderpumpe 27 stillgesetzt.

Reicht beim ASR-Betrieb das in der Speicherkammer 46 enthaltene Bremsflüssigkeitsvolumen nicht aus, den erforderlichen Bremsdruck in den Radbremszylindern 10 einzustellen, so kann durch erneute Aktivierung des Elektromagneten 47 ein weiterer Speicherkolbenhub bewirkt werden. Der in der Speicherkammer 46 durch den Speicherkolbenhub entstehende Unterdruck bewirkt ein erneutes Einströmen von Bremsflüssigkeit aus dem Bremsflüssigkeitsbehälter 18 in die Speicherkammer 46, die nachfolgend wiederum zur Einspeisung in das Pumpenelement 28 verwendet wird. Kann umgekehrt das aus den Radbremszylindern 10 beim Bremsdruckabbau abströmende Bremsflüssigkeitsvolumen von der Speicherkammer 46 nicht vollständig aufgenommen werden, so wird das Absperrventil 35 in seine Grundstellung zurückgesetzt und das Bremsflüssigkeitsvolumen in den Hauptbremszylinder 15 zurückgefördert.

Die Erfindung ist nicht auf das beschriebene Ausführungsbeispiel beschränkt. Bei einer Zweikreisbremsanlage mit diagonaler Bremskreisaufteilung wird auch der Niederdruckspeicher 38 durch einen gleichartigen Kolbenspeicher 40 ersetzt. Ein weiteres Absperrventil 35 ist in der Verbindungsleitung 42 zwischen dem Bremskreisausgang 17 des Hauptbremszylinders 15 und dem Eingang 26 des Hydroaggregats 20 vorzusehen.

Im Falle der Ausführung des Speicherkolbens 44 aus einem nichtmagnetischen Material, wie Aluminium, wird in dem die Speicherkammer 46 begrenzenden vorderen Teil des Speicherkolbens 44 ein Eisenkern eingelegt und beispielsweise durch Kleben am Speicherkolben 44 befestigt. Der Eisenkern bildet dann den Anker des Elektromagneten 47.

**Patentansprüche**

1. Hydraulische Zweikreisbremsanlage mit Blokkierschutzsystem und Antriebsschlupfregelung für Kraftfahrzeuge mit einem Hauptbremszylinder zum Aussteuern eines Bremsdrucks durch Bremspedalbetätigung, der zwei getrennte Bremskreisausgänge aufweist und mit einem Bremsflüssigkeitsbehälter in Verbindung steht, mit einem an den beiden Bremskreisausgängen angeschlossenen Vierkanal-Hydroaggregat, das vier, auf zwei Bremskreise aufgeteilte Auslaßkanäle zum Anschließen von Radbremszylindern der Fahrzeugräder, jeweils einem Auslaßkanal zugeordnete Steuerventile zum Aussteuern eines radschlupfabhängigen Bremsdrucks in den Radbremszylindern, die einerseits mit je einem Auslaßkanal und andererseits paarweise über je eine Verbindungsleitung mit je einem Bremskreisausgang des Hauptbremszylinders verbunden sind, und eine Rückförderpumpe mit zwei getrennten, in jeweils einem Bremskreis wirksamen Pumpenelementen zum Rückfördern von Bremsflüssigkeit bei Bremsdruckabbau in den Radbremszylindern aufweist, die jeweils eingangsseitig über die Steuerventile mit den einem Bremskreis zugehörigen Auslaßkanälen verbindbar und ausgangsseitig über je eine der Verbindungsleitungen mit dem diesem Bremskreis zugeordneten Bremskreisausgang des Hauptbremszylinders verbunden sind, und mit einer Einrichtung zur Bereitstellung eines Bremsversorgungsdrucks bei Antriebsschlupfregelung, die ein in jeder Verbindungsleitung zwischen einem Bremskreisausgang und dem Ausgang eines einem Bremskreis mit mindestens einem Antriebsrad zugeordneten Pumpenelements der Rückförderpumpe angeordnetes Absperrventil, das während der Antriebsschlupfregelung den Bremskreis von dem Hauptbremszylinder trennt, und mindestens einen Kolbenspeicher zum Speisen dieses Pumpenelements aufweist, der einen in einem Speicherzylinder verschiebbaren Speicherkolben, einen den Speicherkolben zur Axialverschiebung gegen die Kraft einer Speicherfeder antreibenden Antrieb und eine vom Speicherkolben begrenzte Speicherkammer umfaßt, die über ein Rückschlagventil mit einem Bremsflüssigkeitsreservoir verbunden ist, dadurch gekennzeichnet, daß das Bremsflüssigkeitsreservoir vom Bremsflüssigkeitsbehälter (18) gebildet ist, daß die Speicherkammer (46) des Kolbenspeichers (40) ständig mit dem Eingang des Pumpenelements (28) verbunden ist und daß zu Beginn der Antriebsschlupfregelung der Speicherkolben-Antrieb (47) zwecks Erzeugung eines Speicherkolbenhubs zum Befüllen der Speicherkammer (46) kurzzeitig aktiviert wird.

2. Bremsanlage nach Anspruch 1, dadurch gekennzeichnet, daß das Pumpenelement (28) eingangsseitig an einer stirnseitig in der Speicherkammer (46) mündenden Anschlußbohrung (52) angeschlossen ist und daß die Fülleitung (49) vom Bremsflüssigkeitsbehälter (18) mit einer den Speicherkolben (44) axial durchdringenden Bohrung (68) verbunden ist, in welcher das Rückschlagventil (50) angeordnet ist.

3. Bremsanlage nach Anspruch 1 oder 2, dadurch gekennzeichnet, daß der Speicherkolben-Antrieb von einem Elektromagneten (47) gebildet ist, dessen Erregerwicklung (55) den Speicherkolben (44) mit Abstand umschließt, und daß der Speicherkolben (44) den Anker des Elektromagneten (47) bildet oder trägt.

4. Bremsanlage nach einem der Ansprüche 1 - 3, dadurch gekennzeichnet, daß mit Umsteuern des Absperrventils (35) in seine Sperrstellung in der Verbindungsleitung (41) ein Rückschlagventil (50) mit zum Hauptbremszylinder (15) weisender Sperrichtung wirksam ist.

Fig. 1

Fig. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | GB-A-2 218 479   (TEVES) <br> * das ganze Dokument * <br> – – – | 1 | B 60 T 8/48 |
| A | EP-A-0 324 103   (BOSCH) <br> * das ganze Dokument * <br> – – – | 1 | |
| A | EP-A-0 360 000   (BOSCH) <br> * Zusammenfassung; Figur 1 * <br> – – – – – | 1 | |
| | | | **RECHERCHIERTE SACHGEBIETE (Int. Cl.5)** <br><br> B 60 T |

Der vorliegende Recherchenbericht wurde für alle Patentansprüche erstellt

| Recherchenort | Abschlußdatum der Recherche | Prüfer |
|---|---|---|
| Berlin | 02 Oktober 91 | BLURTON M D |